# FASCICULE DE BREVET EUROPEEN

(11) **EP 3 914 544 B1**
(45) Date de publication et mention de la délivrance du brevet: **22.03.2023**
(21) Numéro de dépôt: 20707496.4
(22) Date de dépôt: 22.01.2020
(51) Int. Cl.: B65G 21/20, B65G 47/84

(54) **PROCEDE ET DISPOSITIF DE CONVOYAGE DE RECIPIENTS EN POSITION SUSPENDUE**
VERFAHREN UND VORRICHTUNG ZUM FÖRDERN VON BEHÄLTERN IN HÄNGENDER POSITION
METHOD AND DEVICE FOR CONVEYING CONTAINERS IN A SUSPENDED POSITION

(30) Priorité: 24.01.2019 FR 1900617
(43) Date de publication de la demande: 01.12.2021
(73) Titulaire: TIAMA, 69230 Saint-Genis-Laval (FR)
(72) Inventeur: LEPRAT, Etienne, 69110 SAINTE FOY LES LYON (FR); BROSSE, Arnaud, 69007 LYON (FR)
(74) Mandataire: Cabinet Beau de Loménie
(86) Numéro de dépôt international: PCT/FR2020/050077
(87) Numéro de publication internationale: WO 2020/152417

(56) Documents cités:
- EP-A1- 0 377 353
- EP-A1- 0 842 875
- WO-A1-97/10163
- WO-A2-2007/028627

## Description

### Domaine Technique

La présente invention concerne le domaine technique des machines assurant le défilement en translation de récipients devant au moins un et, d'une manière générale, une série de postes de mesure, de contrôle et/ou d'inspection des récipients.

La présente invention trouve une application particulièrement avantageuse dans le domaine de la mesure, du contrôle ou de l'inspection en ligne de récipients, tels que par exemple, des bouteilles, des pots ou des flacons réalisés en verre.

### Technique antérieure

Dans le domaine technique de la mesure, du contrôle ou de l'inspection de récipients en verre, la machine de mesure, de contrôle ou d'inspection comporte un convoyeur assurant le défilement des récipients devant différents postes de mesure, de contrôle ou d'inspection. Selon un exemple connu de réalisation, le convoyeur se présente sous la forme d'une bande transporteuse sur laquelle les récipients reposent par leur fond. Ce mode de transport des récipients ne permet pas d'inspecter ou de contrôler le fond des récipients.

Il est également connu par exemple par le brevet FR 2 846 314, un convoyeur comportant un bâti équipé d'un système d'entraînement à deux paires de courroies sans fin. Les deux courroies d'une paire sont montées en face l'une de l'autre pour définir, entre elles, un chemin de préhension et de déplacement des récipients d'une extrémité à l'autre des courroies. Dans la mesure où le maintien et le transport des récipients s'effectuent sur le corps des récipients à l'aide des courroies, le contrôle, la mesure ou l'inspection ne peut pas être réalisé sur le corps des récipients.

Dans le domaine du transport de récipients en matière plastique, il est connu d'avoir recours à des convoyeurs aériens comportant deux glissières écartées pour délimiter entre elles une voie de translation pour les récipients qui sont supportés par leur contre bague en appui sur les glissières. Un flux d'air déplace les récipients qui glissent par leur contre bague sur les glissières. Le transport des récipients en position suspendue conduit en raison de leur faible poids, à leur balancement, ne permettant pas de réaliser des contrôles optiques précis sur les récipients.

Le brevet FR 2 581 045 présente diverses solutions de transport de récipients légers en PET suspendus sur un bourrelet annulaire, ayant une fonction semblable à la contre bague d'une bouteille en verre. Certaines solutions présentées consistent à soutenir les récipients par des courroies sans fin sous la contre bague. Ces systèmes sont encombrants autour de la bague et du col des récipients. Selon une alternative illustrée aux Fig. 12 et 14, les récipients sont soutenus par des glissières sous leur contre bague. Leur déplacement est produit par des doigts 76 qui viennent successivement pousser les récipients sur des glissières, lesdits doigts étant fixés sur une courroie sans fin. L'inconvénient de cette solution est que le mouvement des récipients n'est pas précis. En effet, les récipients reposent simplement sur les glissières, et ils peuvent librement vibrer ou osciller transversalement ou longitudinalement durant leur déplacement.

De même, la demande de brevet WO 2007/028627 décrit une installation pour le convoyage de préformes de bouteilles en matière plastique comportant deux glissières écartées pour délimiter entre elles une voie de translation des préformes et pour supporter les préformes par leur contre bague, ces glissières étant adaptées pour assurer le glissement des préformes sur leur contre bague; au moins une courroie entraînée en translation selon une direction de translation, et montée en surplomb des glissières et présentant une surface d'appui sensiblement orthogonale au plan de support défini par les glissières et destinée à venir en appui sur les cols des préformes; et un système exerçant une pression mécanique sur la courroie selon une direction sensiblement perpendiculaire à la direction de déplacement pour créer une liaison par adhérence entre le col des préformes et la surface d'appui de la courroie pour assurer l'entraînement en translation des préformes suspendus par leur contre bague qui glisse sur les glissières.

La demande de brevet EP 0 842 875 décrit une installation de convoyage de bouteilles en plastique à l'aide de deux guides disposés de part et d'autres des bouteilles et en contact avec la surface inférieure et la surface supérieure des épaulements s'étendant en saillie à partir de telles bouteilles en plastique. Une telle installation est adaptée exclusivement au convoyage de bouteilles plastiques présentant un épaulement saillant. De plus, même si cette solution permet de limiter le balancement des bouteilles au cours de leur déplacement, ces bouteilles ne sont pas maintenues dans des positions stables offrant la possibilité de réaliser des contrôles optiques précis sur ces bouteilles.

Autrement dit, les solutions connues sont encombrantes d'une part et d'autre part créent un mouvement imprécis des récipients.

### Exposé de l'invention

La présente invention vise à remédier aux inconvénients de l'art antérieur en proposant une nouvelle technique de transport en translation des récipients en position suspendue pour permettre une inspection du corps, du fond et voire même de l'épaule des récipients, cette technique assurant un transport des récipients dans une position stable pour permettre la mise en œuvre d'opérations précises de contrôle, de mesure et/ou d'inspection.

Un objet de l'invention est de proposer un procédé de convoyage en translation dans une zone de transport, de récipients en verre maintenus en position suspendue entre deux glissières sur lesquelles glissent une contre bague aménagée sur chaque récipient qui présente une surface de bague délimitant l'ouverture du récipient, le procédé consistant à assurer le déplacement en translation, des récipients par une surface d'appui d'au moins une courroie entraînée en translation selon une direction de translation et exerçant une pression mécanique sur chaque surface de bague des récipients selon une direction sensiblement perpendiculaire à la direction de déplacement pour créer une liaison par adhérence entre chaque surface de bague des récipients et la surface d'appui de la courroie.

De plus, le procédé selon l'invention peut comporter en outre en combinaison au moins l'une et/ou l'autre des caractéristiques additionnelles suivantes :
- Selon un mode de réalisation, on applique une pression mécanique sur toute la longueur de la courroie située dans la zone de transport, pour créer la liaison par adhérence entre chaque surface de bague des récipients et la surface d'appui de la courroie ;
- Selon un autre mode de réalisation, on applique une pression mécanique par des secteurs de mise en pression distribués dans la zone de transport, pour créer par l'intermédiaire de la partie de la courroie soumise à chaque secteur de mise en pression, la liaison par adhérence entre chaque surface de bague des récipients et la surface d'appui (18a) de la courroie ;
- la courroie assure l'entraînement simultané dans la zone de transport, de plusieurs récipients en créant pour chacun d'eux, la liaison par adhérence entre chaque surface de bague des récipients et la surface d'appui de la courroie ;
- les récipients sont pris en charge par la courroie et les glissières de manière à être espacés entre eux afin que la partie de la courroie soumise à chaque secteur de mise sous pression, crée une liaison par adhérence de la surface d'appui de la courroie sur la surface de bague d'un unique récipient ;
- les secteurs de mise sous pression sont répartis dans la zone de transport, pour assurer le maintien de la liaison par adhérence entre chaque surface de bague des récipients et la surface d'appui de la courroie, pendant le déplacement des récipients sur toute la zone de transport et en particulier lors du passage des récipients d'un secteur au secteur suivant ;
- la courroie est guidée verticalement d'une part, en entrée de la zone de transport, pour que la surface d'appui de la courroie se rapproche progressivement des glissières afin d'assurer l'engagement des récipients dans la zone de transport, et d'autre part, en sortie de la zone de transport, pour que la surface d'appui de la courroie s'écarte progressivement des glissières afin d'assurer la sortie des récipients de la zone de transport ;
- l'écartement entre les glissières est adapté pour assurer un guidage des récipients transversalement par rapport à la direction de translation des récipients.

Un autre objet de l'invention est de proposer un convoyeur pour déplacer dans une zone de transport, des récipients en verre en position suspendue par une contre bague aménagée sur chaque récipient qui présente une surface de bague délimitant l'ouverture du récipient, le convoyeur comportant :
- deux glissières écartées pour délimiter entre elles une voie de translation des récipients et pour supporter les récipients par leur contre bague, ces glissières étant adaptées pour assurer le glissement des récipients sur leur contre bague ;
- au moins une courroie entraînée en translation selon une direction de translation et montée en surplomb de la voie de translation, cette courroie présentant une surface d'appui sensiblement parallèle au plan de support défini par les glissières et destinée à venir en appui sur les surfaces de bague des récipients ;
- et un système exerçant une pression mécanique sur la courroie selon une direction sensiblement perpendiculaire à la direction de déplacement pour créer une liaison par adhérence entre chaque surface de bague des récipients et la surface d'appui de la courroie pour assurer l'entraînement en translation des récipients suspendus par leur contre bague qui glisse sur les glissières.

De plus, le convoyeur selon l'invention peut comporter en outre en combinaison au moins l'une et/ou l'autre des caractéristiques additionnelles suivantes :
- le système exerçant une pression mécanique exerce une pression mécanique à rappel élastique ;
- le système qui exerce une pression mécanique et la courroie sont adaptés afin que l'étendue de la surface d'appui de la courroie sur la surface de bague des récipients assure l'entraînement en translation des récipients ;
- le système exerçant une pression mécanique sur la courroie comporte des secteurs de mise en pression répartis dans la zone de transport, pour assurer le maintien de la liaison par adhérence entre chaque surface de bague des récipients et la surface d'appui de la courroie tout le long de la zone de transport ;
- chaque secteur de mise en pression comporte un corps d'appui sur la surface de la courroie opposée de la surface d'appui, ce corps d'appui étant guidé en déplacement vertical et sollicité par un système de pression élastique qui est mis en compression à vide par une butée basse réglable ;
- l'ensemble comportant la courroie et le système exerçant une pression mécanique comporte un système de réglage vertical permettant de régler la distance verticale entre la surface d'appui de la courroie et les glissières de manière à s'adapter à la hauteur de bague délimitée entre la contre bague et la surface de bague ;
- chaque glissière comporte un rail linéaire de guidage à partir duquel s'élève un support, la largeur des rails étant dimensionnée pour supporter les récipients par leur contre bague et pour limiter la distance entre le col et le support, au jeu fonctionnel autorisant le glissement des récipients ;
- les glissières comportent un système de réglage de leur écartement pour assurer un guidage des récipients transversalement par rapport à la direction de translation des récipients, en s'adaptant aux dimensions des récipients ;
- la courroie est une courroie sans fin montée entre deux poulies dont au moins une est entraînée en rotation, cette courroie étant guidée verticalement d'une part, en entrée de la zone de transport, pour se rapprocher des glissières en descendant progressivement afin d'assurer l'engagement des récipients dans la zone de transport, et d'autre part, en sortie de la zone de transport, pour s'écarter des glissières en montant progressivement afin d'assurer la sortie des récipients de la zone de transport.

Un autre objet de l'invention est de proposer une installation de contrôle, d'inspection et / ou de mesure comportant un convoyeur conforme à l'invention, pour transporter des récipients en verre en position stable suspendue par leur contre bague, cette installation comportant au moins un récepteur et / ou un émetteur de rayonnement électromagnétique pour le contrôle, l'inspection et/ou la mesure d'au moins une partie des récipients transportés par le convoyeur et située sous la contre bague.

Selon l'invention, l'installation peut comporter en outre en combinaison au moins l'une et/ou l'autre des caractéristiques additionnelles suivantes :
- au moins un récepteur et / ou un émetteur est positionné pour observer l'épaule, le corps ou le fond des récipients avec l'axe optique présentant un angle de plongée avec un plan horizontal au niveau du point observé sur l'axe optique supérieur à 45°.

### Brève description des dessins

[Fig. 1] La **Figure 1** est une vue en élévation de côté d'un exemple de réalisation d'un convoyeur conforme à l'invention montrant le déplacement d'un récipient en position suspendue.
[Fig. 2] La **Figure 2** est une vue analogue à la **Fig. 1** montrant l'évolution du déplacement du récipient par rapport à sa position illustrée à la **Fig. 1****.**
[Fig. 3] La **Figure 3** est une vue simplifiée en coupe transversale du convoyeur illustré à la **Fig. 1****.**
[Fig. 4] La **Figure 4** est une vue en coupe transversale d'un autre exemple de réalisation d'un convoyeur mettant en oeuvre deux courroies de transport.
[Fig. 5] La **Figure 5** est une vue en coupe transversale d'un autre exemple de réalisation d'une courroie susceptible d'être mise en oeuvre dans un convoyeur conforme à l'invention.
[Fig. 6] La **Figure 6** est un schéma à grande échelle explicitant le principe de transport des récipients par le convoyeur conforme à l'invention.
[Fig. 7] La **Figure 7** est une vue de dessus montrant un exemple de réalisation d'un système de transport amont assurant l'amenée des récipients au convoyeur conforme à l'invention.
[Fig. 8] La **Figure 8** est une vue de face montrant le système de transport amont illustré à la **Fig. 7** et assurant l'amenée des récipients au convoyeur conforme à l'invention.
[Fig. 9A-9B] La **Figure 9A** est une vue de dessus de la surface de bague d'un récipient sur laquelle est représentée la surface d'appui d'un exemple de réalisation d'une courroie tandis que la **Fig. 9B** représente en coupe, la courroie illustrée à la **Fig. 9A** en appui sur un récipient transporté par le convoyeur conforme à l'invention.
[Fig. 10A-10B] La **Figure 10A** est une vue de dessus de la surface de bague d'un récipient sur laquelle est représentée la surface d'appui d'un autre exemple de réalisation d'une courroie tandis que la **Fig. 10B** représente en coupe, la courroie illustrée à la **Fig. 10A** en appui sur un récipient transporté par le convoyeur conforme à l'invention.
[Fig. 11A-11B] La **Figure 11A** est une vue de dessus de la surface de bague d'un récipient sur laquelle est représentée la surface d'appui d'un autre exemple de réalisation d'une courroie tandis que la **Fig. 118** représente en coupe, la courroie illustrée à la **Fig. 11A** en appui sur un récipient transporté par le convoyeur conforme à l'invention.

### Description des modes de réalisation

Tel que cela ressort des dessins, l'objet de l'invention concerne un convoyeur 1 adapté pour déplacer dans une zone de transport ou de convoyage Z, des récipients 2 en position suspendue selon une direction de translation représentée par la flèche F. Avantageusement, les récipients 2 sont des récipients en verre de préférence vide, tels que des bouteilles, des flacons ou des pots. Classiquement, chaque récipient 2 possède un fond 3 surmonté par un corps 4 se prolongeant par une épaule 5 qui se raccorde par un col 5a, à une bague 6. Ainsi, la bague 6 est délimitée par une contre bague 7 formant un épaulement en saillie à partir du col 5a. Cette contre bague 7 sert notamment pendant la manipulation de la paraison lors du formage, puis d'accroche pour des dispositifs de fermeture. La bague 6 est délimitée à l'opposé de la contre bague 7, par une surface de bague 8 délimitant l'ouverture du récipient. Cette surface de bague 8 est généralement plane, semi-torique ou tronconique et sert dans de nombreux cas à l'étanchéité avec le joint du couvercle, de la capsule ou du bouchon à vis. La bague 6 des récipients 2 est donc délimitée entre la contre bague 7 et la surface de bague 8. La hauteur de la bague 6 est alors la distance verticale, entre la contre bague 7 et la surface de bague 8.

Le convoyeur 1 comporte un bâti 10 supportant deux glissières 11 écartées pour délimiter entre elles une voie de translation 12 des récipients. Plus précisément, chaque glissière 11 comporte un rail linéaire de guidage 13 à partir duquel s'élève un support 14 fixé au bâti 10. Les rails 13 sont montés parallèlement entre eux en étant situés dans un même plan de support horizontal P pour constituer une surface plane de support et de guidage en translation pour les récipients. Plus précisément, les rails 13 sont écartés pour permettre le passage entre eux du col 5a des récipients alors que la contre bague 7 des récipients est en appui sur les rails 13.

Il doit être compris que les glissières 11 sont adaptées pour assurer que la contre bague 7 des récipients glisse sur ces glissières au cours de leur transport. Bien entendu, les glissières et en particulier les rails 13 ont des propriétés tribologiques permettant le glissement avec de faibles frottements de la contre-bague 7 et des propriétés de résistance à l'abrasion. Ces propriétés tribologiques et les propriétés de résistance à l'abrasion des surfaces de glissement des glissières 11 sont propres ou ajoutées par des traitements ou revêtements de surface appliqués aux rails.

Selon une caractéristique avantageuse de réalisation, la largeur des rails 13 est dimensionnée pour supporter les récipients 2 par leur contre bague 7 tout en limitant la distance transversale entre le col 5a et le support 14, au jeu fonctionnel près autorisant le glissement des récipients. Une telle disposition permet de limiter la largeur des glissières 11 et par suite d'augmenter l'étendue angulaire de l'inspection optique du récipient comme cela sera expliqué en détail dans la suite de la description. Dans le même sens, il est à noter que les supports 14 sont allongés verticalement.

Selon une caractéristique avantageuse de réalisation, les glissières 11 comportent un système de réglage 15 de leur écartement pour permettre de régler la largeur de la voie de translation 12 des récipients pour permettre de s'adapter au diamètre des cols 5a des récipients 2. De même, la largeur de la voie de translation 12 est ajustée de manière que les rails 13 puissent supporter les récipients 2 par leur contre bague 7 tout le long de leur trajet sans risque de tomber à travers la voie de translation 12. De manière avantageuse, ce système de réglage 15 ajuste l'écartement entre les rails 13 pour assurer, lors du déplacement des récipients, un guidage des récipients transversalement par rapport à la direction de translation F des récipients 2. Typiquement, l'écartement entre les rails 13 correspond au diamètre du col des récipients, au jeu fonctionnel près, et est inférieur au diamètre de la contre bague afin de soutenir les récipients

Avantageusement, un système de réglage 15 de l'écartement permet un écartement symétrique des glissières 11. Ce système de réglage 15 peut être réalisé de toute manière appropriée comme par exemple à l'aide de systèmes vis-écrou montés entre les supports 14 des rails et le bâti 10. Le système de réglage 15 peut comporter également par exemple des vis sans fin transversales, des paliers et douilles de guidage horizontal, des manivelles ou des actionneurs électriques ou pneumatiques, des moyens de blocage en position, ces systèmes étant de préférence situés aux extrémités ou à l'extérieur de la zone de transport Z.

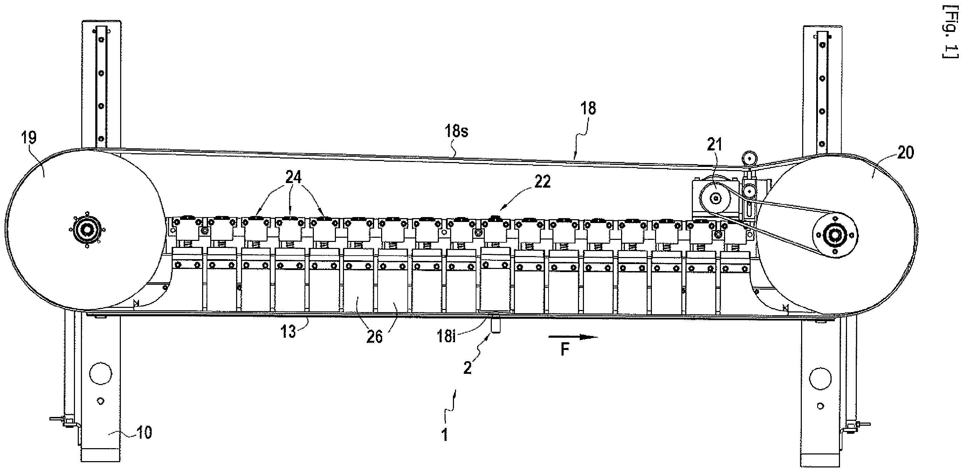

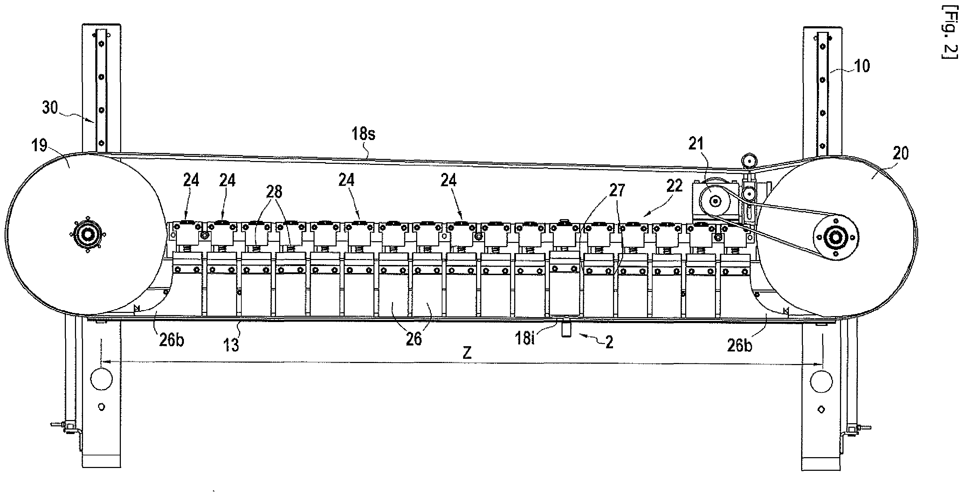

Selon une autre caractéristique de l'invention, le convoyeur 1 comporte au moins une courroie 18 entraînée en translation et montée en surplomb de la voie de translation 12. Tel que cela ressort plus précisément des Fig. 1 et 2, le convoyeur 1 comporte une courroie 18 sans fin, montée entre deux poulies 19, 20 dont les axes sont supportés par le bâti 10. Au moins une des poulies, à savoir la poulie 20 dans l'exemple illustré est entraînée en rotation par un motoréducteur 21 de tous types connus, porté par le bâti. La courroie 18 comporte ainsi un brin supérieur 18s et un brin inférieur 18i. Les poulies 19, 20 sont montées de manière que le brin inférieur 18i de la courroie s'étende en surplomb de la voie de translation 12 et en particulier au-dessus du niveau des rails 13 comme cela sera compris dans la suite de la description. Le brin inférieur 18i de la courroie se déplace selon la direction de translation F, parallèlement aux rails 13.

De manière plus précise, cette courroie 18 présente une surface externe opposée à la surface interne qui est considérée comme venant en contact avec les poulies 19, 20. La surface externe du brin inférieur 18i de la courroie est tournée en direction des rails 13 et de la surface de bague 8 s'élevant au-dessus des rails. Une partie de cette surface externe du brin inférieur 18i appelée surface d'appui 18a dans la suite de la description est destinée à venir en appui sur les surfaces de bague 8 des récipients 2 lorsque ces derniers sont en appui par leur contre bague 7 sur les rails 13. Cette surface d'appui 18a est sensiblement parallèle au plan de support P défini par les glissières.

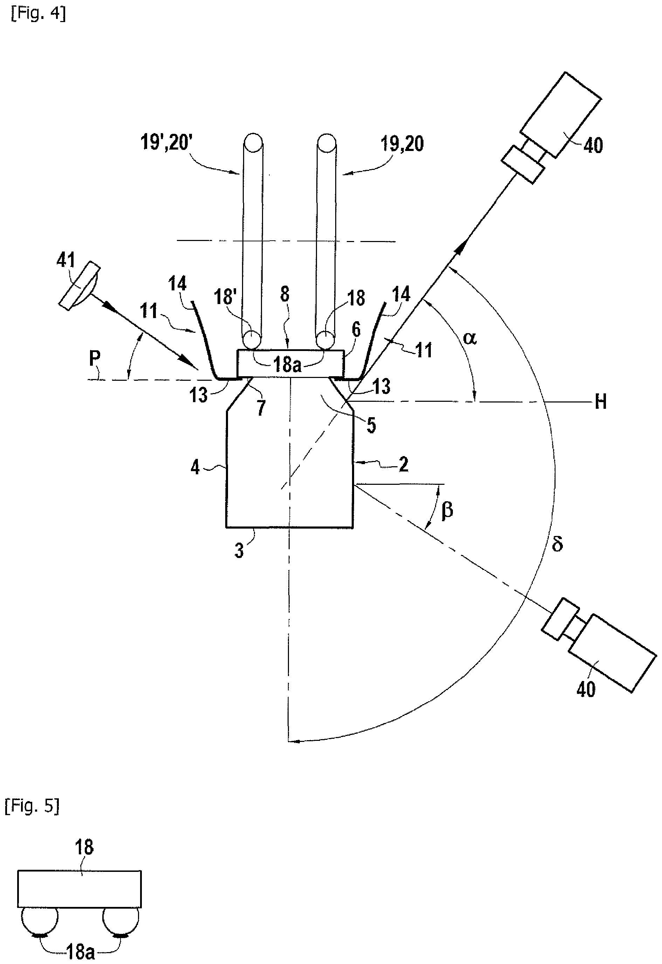

Selon une variante avantageuse de réalisation, la surface d'appui 18a de la courroie est plate. Elle peut être lisse, mais alternativement texturée, par exemple avec des picots ou des nervures comme illustré à la Fig. 5 qui montre une courroie comportant deux nervures. De tels reliefs ont pour objectif de maintenir l'adhérence malgré des surfaces de bague parfois non parfaitement plates. La courroie 18 peut présenter une partie durcie pour la surface d'appui 18a. La courroie 18 peut présenter par exemple, une section trapézoïdale, rectangulaire ou ronde de type « polycorde ». Bien entendu, il peut être envisagé de disposer d'une gamme de plusieurs courroies de largeurs différentes.

Le convoyeur 1 comporte également un système 22 exerçant une pression mécanique sur la courroie 18 selon une direction sensiblement perpendiculaire à la direction de déplacement pour créer une liaison par adhérence entre chaque surface de bague 8 des récipients 2 et la surface d'appui 18a de la courroie pour assurer l'entrainement en translation des récipients suspendus par leur contre bague 7 qui glisse sur les glissières 11. La pression mécanique exercée sur la courroie 18 est telle que sa partie au contact de la surface de bague 8, appelée surface d'appui 18a, y adhère pour créer une liaison par adhérence, entraînant en translation le récipient. Il doit être compris que la surface d'appui 18a désigne sur la courroie, quelle que soit sa constitution matérielle, la surface de la courroie ayant pour fonction de venir appuyer sur la surface de bague 8.

Le système 22 est adapté pour créer entre la courroie et le récipient, une liaison non pas par obstacle mais par adhérence ou friction. Classiquement, une liaison par adhérence est une liaison dans laquelle les phénomènes de frottement et d'adhérence s'opposent à la suppression de la liaison. L'action mécanique de la courroie 18 sur la surface de bague comprend une composante verticale, normale à la surface de bague, qui constitue donc l'appui, et une composante de frottement horizontale, donc parallèle au plan de support P, qui provoque donc l'entraînement, le déplacement des récipients. La liaison est sans glissement, donc la courroie 18 et la surface de bague 8 qui sont en contact se déplacent dans le même sens, sans glissement. Par conséquent, la vitesse de la courroie est égale la vitesse de translation des récipients. La composante verticale de l'action, qui est répartie sur la surface de bague, a également pour effet le plaquage de la contre bague sur les rails, donc la contre bague reste durant le déplacement, parallèle au plan de support P. Ainsi, le mouvement des récipients est une translation pure et précise aux jeux fonctionnels près. L'action mécanique de la courroie étant répartie sur la surface d'appui 18a, elle est appelée pression.

Chaque récipient 2 est ainsi entraîné en translation par la courroie 18, avec sa surface de bague 8 adhérant à la surface d'appui 18a de la courroie alors que la contre bague 7 glisse sur les rails 13. La bague 6 de chaque récipient 2 est soumise du côté de sa surface de bague 8, à une pression conduisant à sa liaison avec la courroie 18 et du côté de sa contre bague 7, à une pression permettant le glissement de la contre bague sur les rails 13. La pression exercée par la courroie 18 maintient le contact de la contre bague 7 sur les rails 13 en considérant que la réaction des rails conduit à la suspension du récipient sur les rails 13. Il doit être compris que chaque récipient 2 est ainsi translaté, dans une zone de transport Z, dans une position stable suspendue, sans mouvements de débattement ou de pivotement, compte tenu du maintien du récipient en appui forcé sur les rails. Autrement dit, la bague 6 du récipient est maintenue pincée entre la courroie 18 et les rails 13 durant la translation.

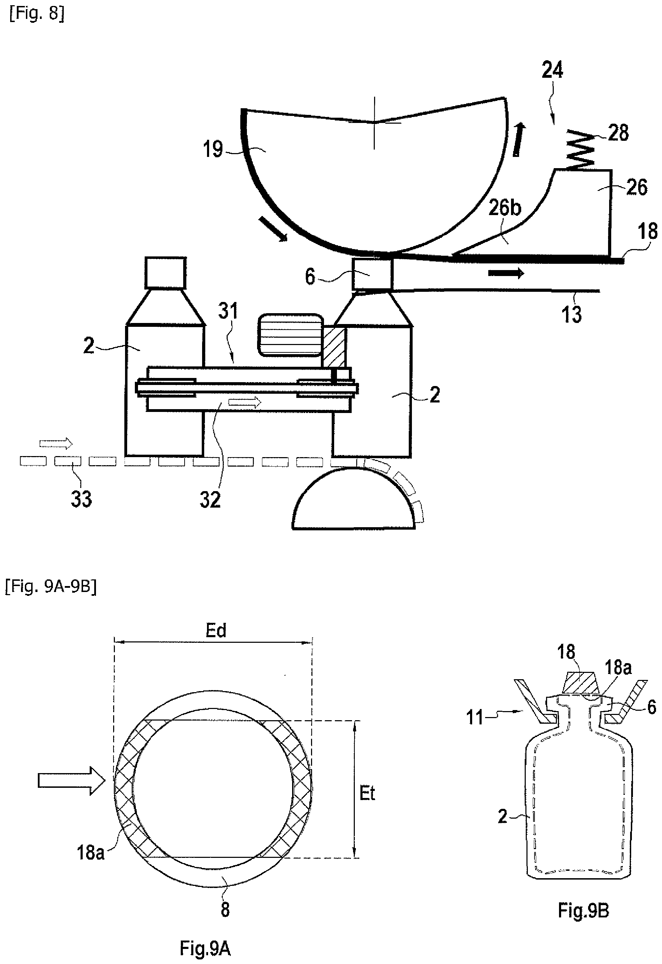

Avantageusement, le système 22 qui exerce une pression mécanique sur la courroie 18 est adapté afin que l'étendue de la surface d'appui 18a de la courroie sur la surface de bague 8 des récipients assure une translation des récipients, dans une position suspendue stable. Typiquement, la zone de la surface de bague 8 sur laquelle s'exerce la pression est telle que l'appui de la contre bague 7 sur les rails permet un positionnement stable de préférence, vertical ou sensiblement vertical des récipients pendant le transport. Ainsi, comme représenté aux Fig. 9A, 10A, 11A, l'étendue longitudinale Ed de la surface d'appui 18a de la courroie avec la surface de bague 8, prise dans le sens de translation est suffisamment grande pour obtenir une liaison par adhérence et une répartition de la pression pour assurer un appui stable de la contre bague 7 sur les rails 13. De même, la surface d'appui 18a de la courroie est répartie transversalement, selon une étendue transversale Et, sur la surface de bague 8 pour assurer un appui stable de la contre bague 7 sur les rails 13.

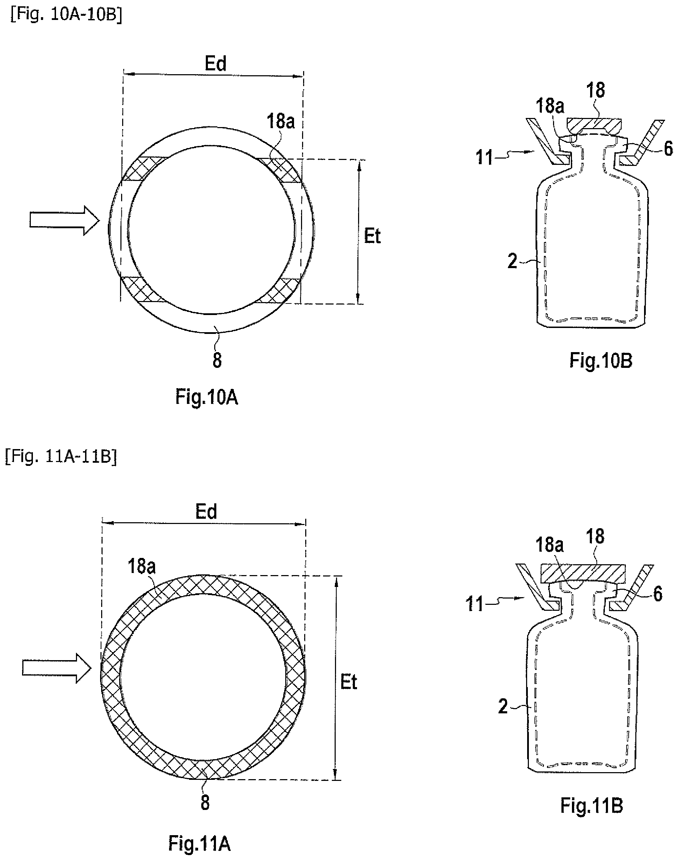

Dans les exemples de réalisation illustrés aux Fig. 9A et 11A, l'étendue longitudinale Ed de la surface d'appui 18a de la courroie avec la surface de bague 8, est égale au diamètre de la surface de bague 8 tandis que dans l'exemple illustré à la Fig. 10A, l'étendue longitudinale Ed est légèrement inférieure au diamètre de la surface de bague 8. Dans les exemples de réalisation illustrés aux Fig. 9A et 10A, l'étendue transversale Et de la surface d'appui 18a de la courroie avec la surface de bague 8, est légèrement inférieure au diamètre de la surface de bague 8 tandis que dans l'exemple illustré à la Fig. 11A, l'étendue transversale Et est égale au diamètre de la surface de bague 8. Il est à noter que l'étendue transversale Et de la surface d'appui 18a de la courroie avec la surface de bague, est continue dans l'exemple illustré à la Fig. 9A et discontinue dans l'exemple illustré à la Fig. 10A, c'est-à-dire interrompue et composée de deux zones disjointes. Typiquement, l'étendue transversale Et de la surface d'appui 18a s'étend de manière symétrique par rapport à l'axe de symétrie du récipient.

Bien entendu, la largeur de la courroie 18 est adaptée à la largeur des surfaces de bague 8 des récipients et au choix des étendues Et, Ed de la surface d'appui 18a de la courroie avec la surface de bague. Dans l'exemple de réalisation illustré aux Fig. 9A et 9B, la courroie possède une largeur légèrement inférieure au diamètre de la surface de bague 8 alors que dans l'exemple de réalisation illustré aux Fig. 11A et 11B, la courroie 18 possède une largeur supérieure au diamètre de la surface de bague 8 du récipient. Dans l'exemple de réalisation illustré aux Fig. 10A et 10B, la courroie 18 possède deux nervures comme illustré à la Fig. 5 permettant d'obtenir la surface d'appui discontinue 18a.

Selon une autre variante de réalisation, le convoyeur 1 peut comporter deux courroies 18, 18' permettant d'obtenir la surface d'appui discontinue 18a illustrée à la Fig. 10A. Selon cette variante de réalisation illustrée à la Fig. 4, les deux courroies 18, 18' sont disposées de manière symétrique par rapport au plan de symétrie de transport passant par le milieu des rails 13. Les courroies 18, 18' possèdent ainsi chacune une largeur limitée par rapport au diamètre de la surface de bague 8. Les courroies 18, 18' sont positionnées de sorte que la surface d'appui des courroies 18, 18' s'étend de part et d'autre de l'axe de symétrie du récipient. Chaque courroie 18, 18' est montée sur une paire de poulies 19,19-20, 20' dont une poulie de chaque paire comporte un système commun d'entrainement en rotation. Il peut bien entendu être prévu de régler l'écartement entre les courroies 18, 18' en fonction des dimensions de la surface de bague des récipients.

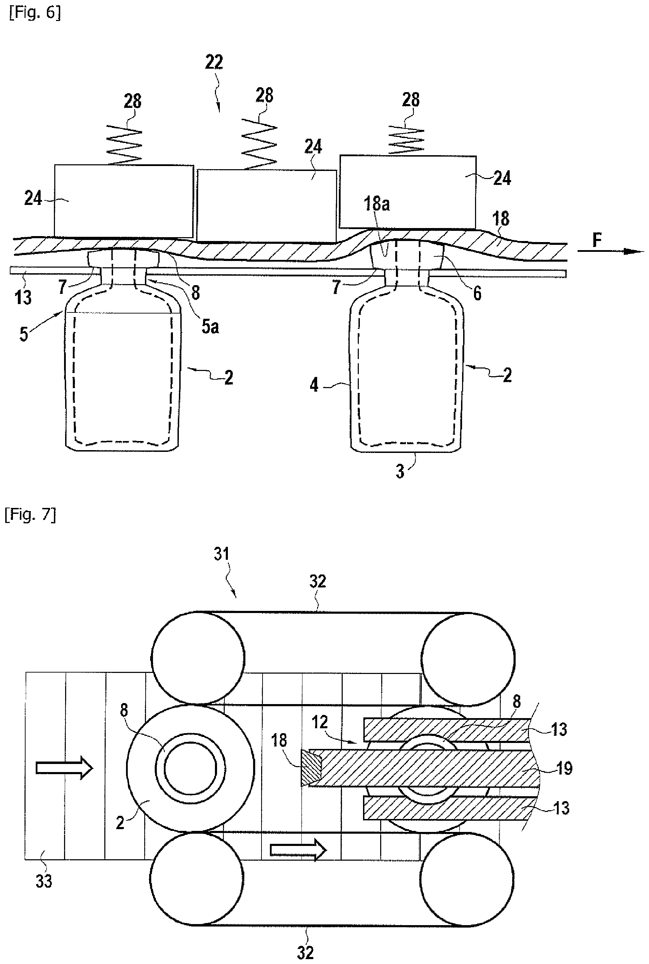

Selon une caractéristique avantageuse de réalisation, le système 22 exerçant une pression mécanique sur la courroie 18 exerce une pression mécanique à rappel élastique. Il doit être compris que ce système 22 exerce une pression mécanique sur la courroie lorsqu'un récipient 2 est situé entre la courroie 18 et les glissières 11 comme illustré à la Fig. 7. A vide, c'est-à-dire en l'absence d'un récipient 2 entre la courroie et les glissières, ce système 22 n'exerce pas ou peu de pression mécanique sur la courroie. Ainsi, le système 22 de pression mécanique est apte à occuper soit une position de travail pour laquelle il crée une liaison par adhérence entre chaque surface de bague 8 des récipients 2 et la surface d'appui 18a de la courroie, soit une position de repos en n'exerçant pas ou peu de pression sur la courroie en l'absence d'un récipient. Le passage de la position de repos à la position de travail est réalisé automatiquement par l'engagement de la bague 6 entre les rails 13 et le système 22 exerçant la pression s'opposant à l'action de soulèvement créée par l'engagement de la bague 6. Le passage de la position de travail à la position de repos est réalisé automatiquement par le désengagement de la bague 6 des rails 13 de sorte que le système 22 revient à sa position de repos par l'effet de rappel élastique.

Bien entendu, la position de repos est telle que la courroie 18 se trouve positionnée par rapport aux rails 13, à une hauteur inférieure à la hauteur de la bague 6 des récipients 2. L'engagement de la bague 6 entre les rails 13 et le système exerçant la pression 22 conduit à écarter des rails, le système exerçant la pression 22, conduisant à l'application sur la courroie 18 d'une pression mécanique adaptée pour créer la liaison par adhérence. C'est donc la bague 6 du récipient 2 qui soulève la courroie et par conséquent le système 22 de pression mécanique.

Le système 22 exerçant une pression mécanique sur la courroie 18 peut être réalisé de différentes manières. Dans l'exemple de réalisation illustré sur les Fig. 1 à 3, le système 22 exerçant une pression mécanique sur la courroie comporte des secteurs de mise en pression 24 répartis dans la zone de transport Z, pour assurer le maintien de la liaison par adhérence entre chaque surface de bague 8 des récipients et la surface d'appui 18a de la courroie tout le long de la zone de transport. Ces secteurs de mise en pression 24 sont répartis de manière fixe le long de la courroie dont le brin inférieur 18i défile devant ces secteurs de mise en pression 24. Tel que cela ressort clairement des Fig. 1 et 2, les secteurs de mise en pression 24 sont disposés côte à côte en étant séparés de manière à assurer le maintien de la liaison par adhérence entre chaque surface de bague 8 des récipients et la surface d'appui 18a de la courroie, pendant le déplacement des récipients sur toute la zone de transport mais également lors du passage des récipients 2 d'un secteur 24 au secteur 24 suivant.

Les secteurs de mise en pression 24 sont en contact avec le brin inférieur 18i de la courroie par la surface interne de la courroie. A cet endroit, l'action mécanique des secteurs sur la surface interne de la courroie 18 comprend une composante verticale, qui constitue donc l'appui, et une composante de frottement horizontale. Il y a donc glissement, la courroie se déplaçant horizontalement mais pas les secteurs de mise en pression 24 qui ne peuvent se déplacer que verticalement sous l'effet conjugué de la courroie et du rappel élastique. L'action mécanique des secteurs de mise en pression 24 étant répartie sur une surface de contact, elle est appelée pression.

Ainsi, les secteurs de mise en pression 24 sont dimensionnés de manière que chaque secteur crée une liaison par adhérence entre une unique surface de bague 8 et la surface d'appui 18 de la courroie. En d'autres termes, un secteur 24 exerce une mise en pression au maximum sur un récipient. Ainsi, chaque secteur 24 est dimensionné pour assurer à lui seul, l'adhérence avec un seul récipient en même temps. De plus, les récipients 2 sont pris en charge par le convoyeur avec un pas d'espacement déterminé afin qu'au plus un secteur de mise en pression 24 agit sur un récipient 2. Il est à noter que les secteurs de mise en pression 24 sont indépendants les uns des autres. De ce fait, le long du brin inférieur 18i, la courroie se trouve par endroit soulevée en présence d'un récipient et par endroit abaissée en l'absence de récipient, donc le long du brin inférieur 18i, la courroie est sur certaines sections en position de repos et sur d'autres, en positon de travail.

Lors de la translation des récipients 2 par la courroie 18, la surface d'appui 18a de la courroie va quitter progressivement un secteur de mise en pression 24 tout en s'engageant progressivement sous le secteur de mise en pression 24 suivant (Fig. 6). Il s'ensuit que le transport des récipients 2 est assuré même lors du passage d'un secteur 24 à un autre.

Il est à noter qu'au lieu de mettre en oeuvre des secteurs 24 de mise en pression individuels successifs, il peut être prévu d'appliquer une pression mécanique sur toute la longueur de la courroie 18 située dans la zone de transport, pour créer la liaison par adhérence entre chaque surface de bague 8 des récipients et la surface d'appui 18a de la courroie. Par exemple, le système 22 pour exercer une pression mécanique sur la courroie 18 peut comporter une chambre ou un ensemble de chambres de confinement d'un mélange gazeux dont une partie de la paroi agit directement ou indirectement sur la courroie 18. Alternativement, le système 22 pour exercer une pression mécanique sur la courroie 18 peut comporter un corps ou plusieurs corps en mousse élastique qui appuient directement ou de préférence indirectement sur la courroie 18.

Le système 22 pour exercer une pression mécanique sur la courroie 18 permet que la surface d'appui de la courroie soulevée par chaque récipient 2 reste en contact pour tous les récipients, étant considéré qu'il existe des écarts pour la hauteur de la bague 6 d'un récipient à l'autre. Autrement dit, le système 22 s'adapte à des variations de la hauteur de bague 6 tout en maintenant toujours une pression de la surface d'appui sur la surface de la bague durant toute la trajectoire de translation parcourue par chaque récipient.

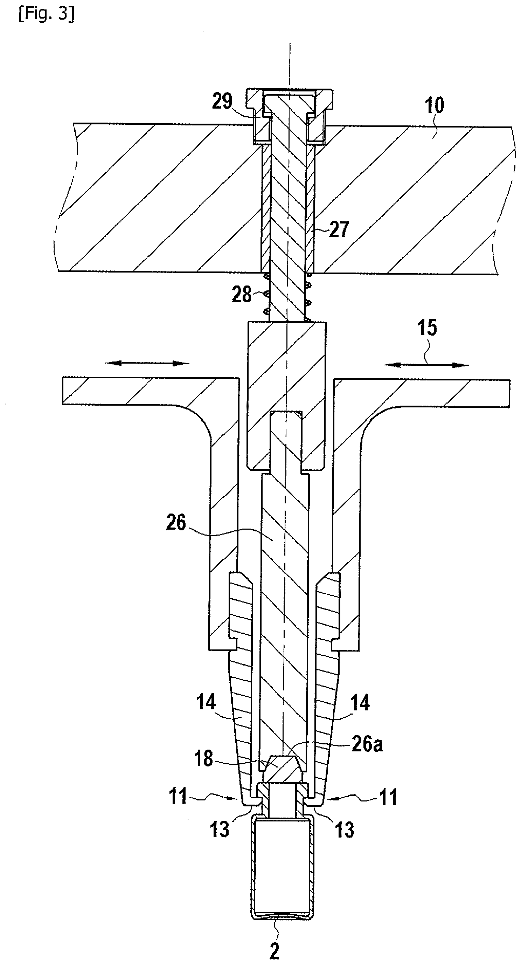

Selon une variante de réalisation illustrée plus précisément à la Fig. 3, chaque secteur de mise en pression 24 comporte un corps d'appui 26 destiné à être en appui sur la surface interne de la courroie 18, opposée de la surface externe adaptée pour constituer la surface d'appui 18a. Par exemple, chaque corps d'appui 26 est pourvu, dans sa face inférieure, d'une gorge 26a de guidage en translation pour la courroie 18.

Ce corps d'appui 26 est guidé en déplacement vertical et est sollicité par un système de pression élastique 28. Selon la variante de réalisation illustrée à la Fig. 3, le moyen de guidage en déplacement vertical du corps d'appui 26 est constitué de coulisses 27 portées par le bâti 10. A vide, c'est-à-dire dans sa position de repos lorsqu'aucun récipient ne se trouve situé en regard du corps d'appui 26, le système de pression élastique 28 est mis en compression par une butée basse réglable 29. Dans sa position de travail, le corps d'appui 26 exerce une pression verticale sur la courroie c'est-à-dire une pression selon une direction sensiblement perpendiculaire à la direction de déplacement T horizontale.

Dans l'exemple illustré, le système de pression élastique 28 est un ressort de compression mais il peut être prévu de réaliser un tel système par un vérin à gaz ou une mousse de polymère. La butée basse 29 positionne le corps d'appui 26 dans sa position de repos lorsqu'aucun récipient ne se trouve situé en regard du corps d'appui 26, cette position de repos étant plus basse que la position en charge lorsqu'un récipient se trouve situé en regard du corps d'appui 26.

Selon une variante avantageuse de réalisation, le convoyeur 1 comporte un système de réglage vertical 30 permettant de régler la distance verticale entre la surface d'appui 18a de la courroie et les glissières 11 de manière à s'adapter à la hauteur de la bague des récipients, correspondant à la distance entre la contre bague 7 et la surface de bague 8. A cet effet, l'ensemble constitué par les poulies 19, 20 supportant la courroie et les secteurs 24 sont montés pour constituer un équipage déplaçable verticalement par rapport aux glissières 11. Typiquement, l'ensemble constitué par les poulies 19, 20, la courroie 18 et les secteurs 24 sont montés mobiles verticalement sur des glissières verticales portées par le bâti 10.

Par ailleurs les glissières 11 sont réglables en position verticale pour faire correspondre les rails 13 à la position de la contre bague 7, en fonction de la hauteur des récipients. En effet les récipients sont généralement amenés dans le convoyeur à l'aide de convoyeurs à chaînes ou palettes sur lesquels les récipients reposent par leurs fonds. Selon une variante, l'ensemble du convoyeur 1 est réglable en hauteur selon la hauteur des récipients 2 à transporter.

Il ressort de la description qui précède que le convoyeur 1 assure le déplacement en translation des récipients 2 par une surface d'appui 18a d'au moins une courroie 18 entraînée en translation et exerçant une pression mécanique sur chaque surface de bague 8 des récipients pour créer une liaison par adhérence entre chaque surface de bague des récipients et la surface d'appui 18a de la courroie.

Avantageusement, la courroie 18 assure l'entrainement simultané dans la zone de transport Z, de plusieurs récipients 2 en créant pour chacun d'eux, la liaison par adhérence entre chaque surface de bague 8 des récipients et la surface d'appui 18a de la courroie. En d'autres termes, plusieurs récipients sont transportés simultanément dans la zone de convoyage Z.

Comme décrit ci-dessus, il est à noter que les récipients 2 sont pris en charge par le convoyeur 1 de manière à être espacés entre eux afin que la partie de la courroie soumise à chaque secteur de mise sous pression 24, crée une liaison par adhérence de la surface d'appui 18a de la courroie sur la surface de bague 8 d'un unique récipient. En d'autres termes, le nombre de récipients 2 déplacés simultanément est au plus égal au nombre de secteurs de mise en pression 24. Dans le cas où une pression mécanique est appliquée sur toute la longueur de la courroie 18, le nombre de récipients 2 déplacés simultanément dépend de l'espacement choisi entre les récipients 2.

Il est à noter que les récipients 2 sont amenés au convoyeur 1 conforme à l'invention par un système de transport de tous types connus en soi, appelé système d'entrée, et sont transférés du convoyeur par un système de transport de tous types connus en soi, appelé système de sortie. Les Fig. 7 et 8 illustrent un exemple de réalisation d'un système d'entrée 31 amenant les récipients un par un, en entrée du convoyeur 1 c'est-à-dire en introduisant les récipients à l'une des extrémités des glissières 11. La sortie du convoyeur 1 est aussi équipée d'un système de sortie récupérant les récipients un par un sortant du convoyeur 1. Un tel système de sortie non représenté est similaire ou différent du système d'entrée du convoyeur.

Selon l'exemple de réalisation illustré, le système d'entrée 31 comporte deux bandes sans fin 32 montées en vis-à-vis et espacées pour prendre en charge chaque récipient reposant par son fond sur une bande transporteuse 33, de manière que les deux bandes sans fin 32 serrent chaque récipient au niveau de leur corps, la bague restant dégagée pour permettre la prise en charge en aval par le convoyeur 1. En effet, généralement dans les usines de production de récipients en verre ou les usines de remplissage, les récipients sont transportés sur des convoyeurs à bande transporteuse 33. La bande transporteuse 33 peut être composée de tout type tel que tapis tissé, courroies ou chaînes de formes diverses. Les courroies sans fin 32 sont adaptées pour engager chaque récipient 2 entre les glissières 11 et à amener la contre bague 7 en appui sur les rails 13. Typiquement, chaque récipient 2 est déposé au niveau de l'extrémité des glissières qui s'établit sensiblement à l'aplomb de l'axe de rotation de la poulie de renvoi 19 de la courroie 18. Chaque récipient 2 est ensuite déplacé en translation par la courroie 18 comme expliqué précédemment.

Avantageusement, la courroie 18 est guidée verticalement d'une part, en entrée de la zone de transport Z, pour se rapprocher progressivement des glissières 11 afin d'assurer l'engagement des récipients dans la zone de transport, et d'autre part, en sortie de la zone de transport Z, pour s'écarter progressivement des glissières 11 afin d'assurer la sortie des récipients de la zone de transport Z. Comme cela ressort plus précisément des Fig. 1, 2 et 8, chaque secteur de mise en pression 24 situé aux extrémités du convoyeur 1 est aménagé pour exercer une pression sur la partie de la courroie 18 qui se dégage en aval de la poulie 19 ou sur la partie de la courroie qui s'enroule en amont de la poulie 20. A cet effet, chaque secteur de mise en pression 24 situé aux deux extrémités du convoyeur 1 comporte un talon d'appui 26b venant s'insérer en-dessous de chaque poulie 19, 20.

L'objet de l'invention offre ainsi un nouveau procédé de convoyage en translation pour des récipients en verre, dans une position stable suspendue. Ce procédé consiste à assurer le déplacement en translation des récipients 2 par une surface d'appui 18a d'au moins une courroie 18 entraînée en translation et exerçant une pression mécanique sur chaque surface de bague 8 des récipients 2 pour créer une liaison par adhérence entre chaque surface de bague 8 des récipients et la surface d'appui 18a de la courroie.

Le convoyeur 1 conforme à l'invention trouve une application particulièrement avantageuse pour une installation de contrôle, d'inspection ou de mesure de récipients en verre. Le convoyeur 1 permet de transporter des récipients en verre en position stable suspendue par leur contre bague 7 dans le champ d'observation d'au moins un récepteur de rayonnement électromagnétique quelconque appelé capteur 40, et/ou dans le champ d'irradiation d'une source de rayonnement électromagnétique quelconque appelée émetteur 41, le capteur 40 et l'émetteur 41 pouvant être positionnés fixement en tous endroits de la zone de de transport Z. Un capteur 40 ou un émetteur 41 permet le contrôle, l'inspection et / ou la mesure d'au moins une partie des récipients transportés, située sous la contre bague 7. Ainsi, le convoyeur 1 a la particularité de permettre l'inspection du fond 3, du corps 4 et même de l'épaule 5 de récipients, y compris de récipients de petite taille comme des flacons pharmaceutiques pour injectable de 5ml. Typiquement, les capteurs 40 sont des capteurs optiques fonctionnant dans un spectre UV, visible ou infra-rouge, par exemple des capteurs d'image, et ils sont munis d'objectifs dont l'axe optique définit une direction d'observation. Comme illustré à la Fig. 4, au moins un capteur 40 est positionné pour observer l'épaule ou le corps ou le fond des récipients avec l'axe optique présentant un angle de plongée α avec un plan horizontal H au niveau du point observé sur l'axe optique, qui est maximal, par exemple α est supérieur à 45°, voire 85°. De même, des sources de rayonnement par exemple des sources de lumières 41, situées au-dessus du plan de bague des récipients peuvent illuminer l'épaule, le corps ou le fond avec des angles de plongée α maximums. Il en va donc de même des angles de contre plongée β possibles entre 0 et 90° par rapport à l'horizontale. Finalement, le convoyeur 1 laisse un volume important au-dessous mais surtout au-dessus du plan passant par la contre bague 7, ce volume n'étant délimité au-dessus de la contre bague 7 que par les glissières 11 qui sont conçues les plus étroites possible transversalement au déplacement. Ce volume disponible peut recevoir des récepteurs de rayonnement électromagnétique 40 et des sources de rayonnement électromagnétique 41. Autrement dit, le convoyeur 1 offre une étendue angulaire d'inspection optique du récipient δ la plus grande possible, dépassant si besoin 135° voire 175°.

Le convoyeur 1 permet de transporter des récipients en verre en position stable suspendue, c'est-à-dire selon un mouvement de translation pure et précis. La stabilité est notamment garantie par le pincement des récipients entre les rails et la courroie. Ceci permet par exemple de connaître la position des récipients dans le champ d'un récepteur. Ceci permet également de relier entre elles des observations successives d'un récipient traversant des champs successifs de plusieurs récepteurs, avec un déplacement connu du récipient traversant les champs successifs.

Le convoyeur 1, par la précision du mouvement généré et l'espace libre laissé autour des récipients, peut trouver d'autres applications que le contrôle, l'inspection ou la mesure de récipients en verre.

## Revendications

1. Procédé de convoyage en translation dans une zone de transport (Z), de récipients en verre (2) maintenus en position suspendue entre deux glissières (11) sur lesquelles glissent une contre bague (7) aménagée sur chaque récipient qui présente une surface de bague (8) délimitant l'ouverture du récipient, le procédé consistant à assurer le déplacement en translation, des récipients (2) par une surface d'appui (18a) d'au moins une courroie (18) entraînée en translation selon une direction de translation et exerçant une pression mécanique sur chaque surface de bague (8) des récipients (2) selon une direction sensiblement perpendiculaire à la direction de déplacement pour créer une liaison par adhérence entre chaque surface de bague (8) des récipients et la surface d'appui (18a) de la courroie.

2. Procédé selon la revendication précédente, selon lequel on applique une pression mécanique sur toute la longueur de la courroie (18) située dans la zone de transport (Z), pour créer la liaison par adhérence entre chaque surface de bague (8) des récipients (2) et la surface d'appui (18a) de la courroie.

3. Procédé selon la revendication 1, selon lequel on applique une pression mécanique par des secteurs de mise en pression (24) distribués dans la zone de transport (Z), pour créer par l'intermédiaire de la partie de la courroie soumise à chaque secteur de mise en pression (24), la liaison par adhérence entre chaque surface de bague (8) des récipients (2) et la surface d'appui (18a) de la courroie.

4. Procédé selon l'une des revendications précédentes, selon lequel la courroie (18) assure l'entraînement simultané dans la zone de transport (Z), de plusieurs récipients (2) en créant pour chacun d'eux, la liaison par adhérence entre chaque surface de bague (8) des récipients (2) et la surface d'appui (18a) de la courroie.

5. Procédé selon les revendications 3 et 4, selon lequel les récipients (2) sont pris en charge par la courroie (18) et les glissières (11) de manière à être espacés entre eux afin que la partie de la courroie soumise à chaque secteur de mise sous pression, crée une liaison par adhérence de la surface d'appui (18a) de la courroie (18) sur la surface de bague (8) d'un unique récipient.

6. Procédé selon l'une des revendications 3 à 5, selon lequel les secteurs de mise sous pression (24), sont répartis dans la zone de transport (Z), pour assurer le maintien de la liaison par adhérence entre chaque surface de bague (8) des récipients et la surface d'appui (18a) de la courroie, pendant le déplacement des récipients (2) sur toute la zone de transport (Z) et en particulier lors du passage des récipients d'un secteur (24) au secteur suivant (24).

7. Procédé selon l'une des revendications précédentes selon lequel la courroie (18) est guidée verticalement d'une part, en entrée de la zone de transport (Z), pour que la surface d'appui (18a) de la courroie (18) se rapproche progressivement des glissières (11) afin d'assurer l'engagement des récipients (2) dans la zone de transport (Z), et d'autre part, en sortie de la zone de transport, pour que la surface d'appui (18a) de la courroie (18) s'écarte progressivement des glissières (11) afin d'assurer la sortie des récipients de la zone de transport.

8. Procédé selon l'une des revendications précédentes, selon lequel l'écartement entre les glissières (11) est adapté pour assurer un guidage des récipients (2) transversalement par rapport à la direction de translation des récipients.

9. Convoyeur pour déplacer dans une zone de transport, des récipients en verre (2) en position suspendue par une contre bague (7) aménagée sur chaque récipient (2) qui présente une surface de bague (8) délimitant l'ouverture du récipient, le convoyeur comportant :
- deux glissières (11) écartées pour délimiter entre elles une voie de translation (12) des récipients (2) et pour supporter les récipients par leur contre bague (7), ces glissières (11) étant adaptées pour assurer le glissement des récipients sur leur contre bague ;
- au moins une courroie (18) entraînée en translation selon une direction de translation et montée en surplomb de la voie de translation (12), cette courroie (18) présentant une surface d'appui (18a) sensiblement parallèle au plan de support (P) défini par les glissières et destinée à venir en appui sur les surfaces de bague (8) des récipients (2) ;
- et un système (22) exerçant une pression mécanique sur la courroie (18) selon une direction sensiblement perpendiculaire à la direction de déplacement pour créer une liaison par adhérence entre chaque surface de bague (7) des récipients et la surface d'appui (18a) de la courroie (18) pour assurer l'entraînement en translation des récipients suspendus par leur contre bague (8) qui glisse sur les glissières (11).

10. Convoyeur selon la revendication précédente, selon lequel le système (22) exerçant une pression mécanique exerce une pression mécanique à rappel élastique.

11. Convoyeur selon les revendications 9 ou 10, selon lequel le système (22) qui exerce une pression mécanique et la courroie (8) sont adaptés afin que l'étendue de la surface d'appui (18a) de la courroie (18) sur la surface de bague (8) des récipients assure l'entraînement en translation des récipients (2).

12. Convoyeur selon l'une des revendications 9 à 11, selon lequel le système (22) exerçant une pression mécanique sur la courroie (18) comporte des secteurs de mise en pression (24) répartis dans la zone de transport (Z), pour assurer le maintien de la liaison par adhérence entre chaque surface de bague (8) des récipients (2) et la surface d'appui (18a) de la courroie (18) tout le long de la zone de transport.

13. Convoyeur selon la revendication 12, selon lequel chaque secteur de mise en pression (24) comporte un corps d'appui sur la surface de la courroie opposée de la surface d'appui, ce corps d'appui étant guidé en déplacement vertical et sollicité par un système de pression élastique qui est mis en compression à vide par une butée basse réglable (29).

14. Convoyeur selon l'une des revendications 9 à 13, selon lequel l'ensemble comportant la courroie (18) et le système exerçant une pression mécanique (22) comporte un système de réglage vertical (30) permettant de régler la distance verticale entre la surface d'appui de la courroie et les glissières (11) de manière à s'adapter à la hauteur de bague (5) délimitée entre la contre bague et la surface de bague.

15. Convoyeur selon l'une des revendications 9 à 14, selon lequel chaque glissière (11) comporte un rail linéaire de guidage (13) à partir duquel s'élève un support (14), la largeur des rails étant dimensionnée pour supporter les récipients par leur contre bague et pour limiter la distance entre le col et le support, au jeu fonctionnel autorisant le glissement des récipients.

16. Convoyeur selon l'une des revendications 9 à 15, selon lequel les glissières (11) comportent un système de réglage (15) de leur écartement pour assurer un guidage des récipients transversalement par rapport à la direction de translation des récipients, en s'adaptant aux dimensions des récipients.

17. Convoyeur selon l'une des revendications 9 à 16, selon lequel la courroie (18) est une courroie sans fin montée entre deux poulies (19, 20) dont au moins une est entraînée en rotation, cette courroie étant guidée verticalement d'une part, en entrée de la zone de transport, pour se rapprocher des glissières (11) en descendant progressivement afin d'assurer l'engagement des récipients dans la zone de transport, et d'autre part, en sortie de la zone de transport, pour s'écarter des glissières (11) en montant progressivement afin d'assurer la sortie des récipients de la zone de transport.

18. Installation de contrôle, d'inspection et / ou de mesure comportant un convoyeur conforme à l'une des revendications 9 à 17, pour transporter des récipients en verre en position stable suspendue par leur contre bague, cette installation comportant au moins un récepteur (40) et / ou un émetteur (41) de rayonnement électromagnétique pour le contrôle, l'inspection et/ou la mesure d'au moins une partie des récipients transportés par le convoyeur et située sous la contre bague (7).

19. Installation selon la revendication précédente, selon laquelle au moins un récepteur (40) et / ou un émetteur (41) est positionné pour observer l'épaule, le corps ou le fond des récipients avec l'axe optique présentant un angle de plongée (o) avec un plan horizontal (H) au niveau du point observé sur l'axe optique supérieur à 45°.

## Patentansprüche

1. Verfahren zum translatorischen Fördern von Behältern (2) aus Glas, die in hängender Position gehalten werden, in einer Transportzone (Z) zwischen zwei Gleitführungen (11), auf denen ein Gegenring (7) gleitet, der auf jedem Behälter eingerichtet ist und eine Ringoberfläche (8) aufweist, welche die Öffnung des Behälters abgrenzt, wobei das Verfahren darin besteht, die translatorische Verlagerung der Behälter (2) durch eine Auflageoberfläche (18a) mindestens eines Riemens (18) sicherzustellen, der entlang einer Translationsrichtung translatorisch angetrieben wird und einen mechanischen Druck auf jede Ringoberfläche (8) der Behälter (2) entlang einer Richtung, die im Wesentlichen senkrecht zur Verlagerungsrichtung ist, ausübt, um eine Verbindung zwischen jeder Ringoberfläche (8) der Behälter und der Auflageoberfläche (18a) des Riemens durch Haftung zu erzeugen.

2. Verfahren nach dem vorhergehenden Anspruch, wobei ein mechanischer Druck auf der gesamten Länge des Riemens (18), die sich in der Transportzone (Z) befindet, angewandt wird, um die Verbindung zwischen jeder Ringoberfläche (8) der Behälter (2) und der Auflageoberfläche (18a) des Riemens durch Haftung zu erzeugen.

3. Verfahren nach Anspruch 1, wobei ein mechanischer Druck durch Druckbeaufschlagungssektoren (24), die in der Transportzone (Z) verteilt sind, angewandt wird, um über den Teil des Riemens, der jedem Druckbeaufschlagungssektor (24) unterliegt, die Verbindung zwischen jeder Ringoberfläche (8) der Behälter (2) und der Auflageoberfläche (18a) des Riemens durch Haftung zu erzeugen.

4. Verfahren nach einem der vorhergehenden Ansprüche, wobei der Riemen (18) den gleichzeitigen Antrieb mehrerer Behälter (2) in der Transportzone (Z) sicherstellt, indem er für jeden von ihnen die Verbindung zwischen jeder Ringoberfläche (8) der Behälter (2) und der Auflageoberfläche (18a) des Riemens durch Haftung erzeugt.

5. Verfahren nach Anspruch 3 und 4, wobei die Behälter (2) durch den Riemen (18) und die Gleitführungen (11) derart übernommen werden, dass sie untereinander beabstandet sind, damit der Teil des Riemens, der jedem Druckbeaufschlagungssektor unterliegt, eine Verbindung der Auflageoberfläche (18a) des Riemens (18) auf der Ringoberfläche (8) eines einzelnen Behälters durch Haftung erzeugt.

6. Verfahren nach einem der Ansprüche 3 bis 5, wobei die Druckbeaufschlagungssektoren (24) in der Transportzone (Z) verteilt sind, um das Aufrechterhalten der Verbindung zwischen jeder Ringoberfläche (8) der Behälter und der Auflageoberfläche (18a) des Riemens durch Haftung während der Verlagerung der Behälter (2) über die gesamte Transportzone (Z) und insbesondere beim Übergang der Behälter von einem Sektor (24) zum folgenden Sektor (24) sicherzustellen.

7. Verfahren nach einem der vorhergehenden Ansprüche, wobei der Riemen (18) vertikal einerseits am Eingang der Transportzone (Z), damit die Auflageoberfläche (18a) des Riemens (18) sich allmählich an die Gleitführungen (11) annähert, um den Eingriff der Behälter (2) in der Transportzone (Z) sicherzustellen, und andererseits am Ausgang der Transportzone geführt wird, damit die Auflageoberfläche (18a) des Riemens (18) sich schrittweise von den Gleitführungen (11) entfernt, um den Ausgang der Behälter aus der Transportzone sicherzustellen.

8. Verfahren nach einem der vorhergehenden Ansprüche, wobei der Abstand zwischen den Gleitführungen (11) angepasst wird, um eine Führung der Behälter (2) quer in Bezug auf die Translationsrichtung der Behälter sicherzustellen.

9. Förderer zum Verlagern von Behältern (2) aus Glas in hängender Position in einer Transportzone durch einen Gegenring (7), der auf jedem Behälter (2) eingerichtet ist und eine Ringoberfläche (8) aufweist, welche die Öffnung des Behälters abgrenzt, wobei der Förderer Folgendes umfasst:
- zwei Gleitführungen (11), die beabstandet sind, um zwischen einander einen Translationsweg (12) der Behälter (2) abzugrenzen und um die Behälter über ihren Gegenring (7) zu tragen, wobei diese Gleitführungen (11) angepasst sind, um das Gleiten der Behälter auf ihrem Gegenring sicherzustellen;
- mindestens einen Riemen (18), der translatorisch entlang einer Translationsrichtung angetrieben wird und über dem Translationsweg (12) überhängend montiert ist, wobei dieser Riemen (18) eine Auflageoberfläche (18a) aufweist, die im Wesentlichen parallel zur durch die Gleitführungen definierten Tragebene (P) ist und dazu bestimmt ist, gegen die Ringoberflächen (8) der Behälter (2) in Auflage zu gelangen;
- und ein System (22), das einen mechanischen Druck auf den Riemen (18) entlang einer Richtung im Wesentlichen senkrecht zur Verlagerungsrichtung ausübt, um eine Verbindung zwischen jeder Ringoberfläche (7) der Behälter und der Auflageoberfläche (18a) des Riemens (18) durch Haftung zu erzeugen, um den translatorischen Antrieb der Behälter sicherzustellen, die über ihren Gegenring (8) aufgehängt sind, der auf den Gleitführungen (11) gleitet.

10. Förderer nach dem vorhergehenden Anspruch, wobei das System (22), das einen mechanischen Druck ausübt, einen mechanischen Druck mit elastischer Rückstellung ausübt.

11. Förderer nach Anspruch 9 oder 10, wobei das System (22), das einen mechanischen Druck ausübt, und der Riemen (8) derart angepasst sind, dass das Ausmaß der Auflageoberfläche (18a) des Riemens (18) auf der Ringoberfläche (8) der Behälter den translatorischen Antrieb der Behälter (2) sicherstellt.

12. Förderer nach einem der Ansprüche 9 bis 11, wobei das System (22), das einen mechanischen Druck auf den Riemen (18) ausübt, Druckbeaufschlagungssektoren (24) umfasst, die in der Transportzone (Z) verteilt sind, um das Aufrechterhalten der Verbindung zwischen jeder Ringoberfläche (8) der Behälter (2) und der Auflageoberfläche (18a) des Riemens (18) über die gesamte Transportzone durch Haftung sicherzustellen.

13. Förderer nach Anspruch 12, wobei jeder Druckbeaufschlagungssektor (24) einen Auflagekörper auf der Oberfläche des Riemens umfasst, die der Auflageoberfläche gegenüberliegt, wobei dieser Auflagekörper in vertikaler Verlagerung geführt wird und durch ein elastisches Drucksystem beansprucht wird, das durch einen verstellbaren unteren Anschlag (29) in Vakuumverdichtung versetzt wird.

14. Förderer nach einem der Ansprüche 9 bis 13, wobei die Anordnung, die den Riemen (18) und das System (22) umfasst, das einen mechanischen Druck ausübt, ein System (30) zur vertikalen Einstellung umfasst, welches das Einstellen des vertikalen Abstands zwischen der Auflageoberfläche des Riemens und den Gleitführungen (11) ermöglicht, derart dass er sich an die Höhe des Rings (5) anpasst, die zwischen dem Gegenring und der Ringoberfläche abgegrenzt ist.

15. Förderer nach einem der Ansprüche 9 bis 14, wobei jede Gleitführung (11) eine lineare Führungsschiene (13) umfasst, ausgehend von der sich ein Träger (14) erhebt, wobei die Breite der Schienen bemessen ist, um die Behälter über ihren Gegenring zu tragen und um den Abstand zwischen dem Hals und dem Träger auf das Betriebsspiel zu begrenzen, welches das Gleiten der Behälter zulässt.

16. Förderer nach einem der Ansprüche 9 bis 15, wobei die Gleitführungen (11) ein System (15) zur Einstellung ihres Abstands umfassen, um eine Führung der Behälter quer in Bezug auf die Translationsrichtung der Behälter durch Anpassen an die Abmessungen der Behälter sicherzustellen.

17. Förderer nach einem der Ansprüche 9 bis 16, wobei der Riemen (18) ein Endlosriemen ist, der zwischen zwei Scheiben (19, 20) montiert ist, von denen mindestens eine drehbar angetrieben wird, wobei dieser Riemen einerseits am Eingang der Transportzone, um sich an die Gleitführungen (11) anzunähern, indem er allmählich absinkt, um den Eingriff der Behälter in der Transportzone sicherzustellen, und andererseits am Ausgang der Transportzone vertikal geführt wird, um sich von den Gleitführungen (11) zu entfernen, indem er allmählich ansteigt, um den Ausgang der Behälter aus der Transportzone sicherzustellen.

18. Einrichtung zur Kontrolle, Prüfung und/oder Messung, die einen Förderer nach einem der Ansprüche 9 bis 17 umfasst, um Behälter aus Glas, die über ihren Gegenring hängen, in stabiler Position zu transportieren, wobei diese Einrichtung mindestens einen Empfänger (40) und/oder einen Sender (41) für elektromagnetische Strahlung für die Kontrolle, Prüfung und/oder Messung zumindest eines Teils der durch den Förderer transportierten Behälter umfasst und sich unter dem Gegenring (7) befindet.

19. Einrichtung nach dem vorhergehenden Anspruch, wobei der mindestens eine Empfänger (40) und/oder eine Sender (41) positioniert ist, um die Schulter, den Körper oder den Boden der Behälter mit der optischen Achse zu beobachten, die einen Eintauchwinkel (a) mit einer horizontalen Ebene (H) im Bereich des auf der optischen Achse beobachteten Punkts aufweist, der größer als 45° ist.

## Claims

1. A method for conveying in translation, in a transport zone (Z), glass containers (2) held in a suspended position between two slide rails (11) on which slides a counter-ring (7) arranged on each container which has a ring surface (8) defining the opening of the container, the method consisting of ensuring the movement in translation of the containers (2) by a bearing surface (18a) of at least one belt (18) driven in translation in a translation direction and exerting mechanical pressure on each ring surface (8) of the containers (2) in a direction substantially perpendicular to the direction of movement to create a bond by adherence between each ring surface (8) of the containers and the bearing surface (18a) of the belt.

2. The method according to the preceding claim, according to which mechanical pressure is applied over the entire length of the belt (18) located in the transport zone (Z) to create the bond by adherence between each ring surface (8) of the containers (2) and the bearing surface (18a) of the belt.

3. The method according to claim 1, according to which mechanical pressure is applied by pressurization sectors (24) distributed within the transport zone (Z), to create, by means of the portion of the belt subjected to each pressurization sector (24), the bond by adherence between each ring surface (8) of the containers (2) and the bearing surface (18a) of the belt.

4. The method according to one of the preceding claims, according to which the belt (18) ensures the simultaneous driving, in the transport zone (Z), of several containers (2) by creating for each of them the bond by adherence between each ring surface (8) of the containers (2) and the bearing surface (18a) of the belt.

5. The method according to claims 3 and 4, according to which the belt (18) and the slide rails (11) take the containers (2) in charge so as to be spaced from one another in order for the portion of the belt subjected to each pressurization sector to create a bond by adherence of the bearing surface (18a) of the belt (18) to the ring surface (8) of a single container.

6. The method according to one of claims 3 to 5, according to which the pressurization sectors (24) are distributed in the transport zone (Z), to ensure the retention of the bond by adherence between each ring surface (8) of the containers and the bearing surface (18a) of the belt, during the movement of the containers (2) over the entire transport zone (Z) and in particular during the passage of the containers from one sector (24) to the following sector (24).

7. The method according to one of the preceding claims, according to which the belt (18) is guided vertically on the one hand, at the entry of the transport zone (Z), so that the bearing surface (18a) of the belt (18) progressively approaches the slide rails (11) in order to ensure the engagement of the containers (2) in the transport zone (Z) and, on the other hand, at the exit of the transport zone, so that the bearing surface (18a) of the belt (18) progressively separates itself from the slide rails (11) in order to ensure the exit of the containers from the transport zone.

8. The method according to one of the preceding claims, according to which the separation between the slide rails (11) is adapted to ensure the guiding of the containers (2) transversely relative to the translation direction of the containers.

9. A conveyor for moving, in a transport zone, glass containers (2) in a position suspended by a counter-ring (7) arranged on each container (2) which has a ring surface (8) defining the opening of the container, the conveyor including:
- two slide rails (11) separated to define between them a translation path (12) of the containers (2) and to support the containers by their counter-ring (7), these slide rails (11) being suitable for ensuring the sliding of the containers on their counter-ring;
- at least one belt (18) driven in translation in a translation direction and mounted overhanging the translation path (12), this belt (18) having a bearing surface (18a) substantially parallel to the support plane (P) defined by the slide rails and intended to be supported on the ring surfaces (8) of the containers (2);
- and a system (22) exerting mechanical pressure on the belt (18) in a direction substantially perpendicular to the direction of movement to create a bond by adherence between each ring surface (7) of the container and the bearing surface (18a) of the belt (18) to ensure the driving in translation of the containers suspended by their counter-ring (8) which slides on the slide rails (11).

10. The conveyor according to the preceding claims, according to which the system (22) exerting mechanical pressure exerts mechanical pressure with an elastic return.

11. The conveyor according to claims 9 or 10, according to which the system (22) which exerts mechanical pressure and the belt (8) are adapted so that the extent of the bearing surface (18a) of the belt (18) on the ring surface (8) of the containers ensures the driving in translation of the containers (2).

12. The conveyor according to one of claims 9 to 11, according to which the system (22) exerting mechanical pressure on the belt (18) includes pressurization sectors (24) distributed in the transport zone (Z), to ensure the retention of the bond by adherence between each ring surface (8) of the containers (2) and the bearing surface (18a) of the belt (18) all along the transport zone.

13. The conveyor according to claim 12, according to which each pressurization sector (24) includes a bearing body on the surface of the belt opposite to the bearing surface, this bearing body being guided in vertical movement and loaded by an elastic pressure system which is set in compression with no load by an adjustable down-stop (29).

14. The conveyor according to one of claims 9 to 13, according to which the assembly includes the belt (18) and the system exerting mechanical pressure (22) includes a vertical adjustment system (30) allowing adjusting the vertical distance between the bearing surface of the belt and the slide rails (11) so as to adapt itself to the height of the ring (5) defined between the counter-ring and the ring surface.

15. The conveyor according to one of claims 9 to 14, according to which each slide rail (11) includes a linear guide rail (13) from which rises a support (14), the width of the rails being dimensioned to support the containers by their counter-ring and to limit the distance between the neck and the support to the functional clearance allowing the sliding of the containers.

16. The conveyor according to one of claims 9 to 15, according to which the slide rails (11) include a system for adjusting (15) their separation, to ensure the guiding of the containers transversely relative to the translation direction of the containers, by adapting itself to the dimensions of the containers.

17. The conveyor according to one of claims 9 to 16, according to which the belt (18) is an endless belt mounted between two pulleys (19, 20) of which at least one is driven in rotation, this belt being guided vertically on the one hand, at the entry of the transport zone, to approach the slide rails (11) by progressively descending in order to ensure the engagement of the containers in the transport zone and, on the other hand, at the exit of the transport zone, to separate itself from the slide rails (11) by progressively rising in order to ensure the exit of the containers from the transport zone.

18. A checking, inspection and/or measuring installation including a conveyor conforming to one of claims 9 to 17, for transporting glass containers in a stable position suspended by their counter-ring, this installation including at least one receiver (40) and/or one emitter (41) of electromagnetic radiation for the checking, the inspection and/or the measuring of at least a portion of the containers transported by the conveyor and located below the counter-ring (7).

19. The installation according to the preceding claim, according to which at least one receiver (40) and/or at least one emitter (41) is positioned to observe the shoulder, the body or the bottom of the containers with the optical axis having a plunging angle (a) to a horizontal plane (H) at the observed point on the optical axis greater than 45°.
